# EUROPEAN PATENT APPLICATION

(11) **EP 2 930 120 A1**
(43) Date of publication of application: **14.10.2015**
(21) Application number: 14163973.2
(22) Date of filing: 09.04.2014
(51) Int. Cl.: B65D 19/12, B65D 88/02, B65D 88/12

(54) **Stackable pallet cage**

(71) Applicant: Swisslog AG, 5033 Buchs/Aarau (CH)
(72) Inventor: Carlsson, Roger, SE-42450 ANGERED (SE); Hattrick, Michael John, SE-43361 STENKULLEN (SE)
(74) Representative: Patentanwälte und Rechtsanwalt Weiß, Arat & Partner mbB

(57) **Abstract**

Stacking frame (1) for pallets (7) comprising a plurality of interconnected frame sections (2.1-2.3), wherein a load-bearing pallet (7) can be introduced so that the frame sections (2.1-2.3) essentially encompass the load-bearing pallet (7).

## Description

This invention disclosed herein concerns a stacking frame, a system for storing and handling loads and a method for operating such a system according to claims 1, 11 and 13.

### PRIOR ART

Warehouses have been employed to handle goods from food to industrial commodities since the Industrial Revolution started. The basic tasks a warehouse and its infrastructural facilities have to fulfil are to receive the goods, to store the goods and to pick the goods when they are required. Although, for example, technical advantages led to automated storage and retrieval systems or to warehouses serving special purposes such as cold warehouses for delicate foods, the general design of almost any warehouse used nowadays is essentially the same.

The handling and storage system applied to operate the warehouse and to organise the storage is pallet racking. The goods handled or stored by the operating staff or by an automated operating system rest on pallets. The pallets, on the other hand, are stored in racks. These racks consist at least of a frame and shelf boards or similar elements which are connected to the frame and serve to carry the pallets. Thus, pallets and racking structures are the basic organizational units in common warehouses.

Palletizing, i.e. stacking of goods onto the pallet, can be done in the warehouse when the goods arrive. Alternatively, the arriving goods are already palletized when they arrive. Palletized goods are then only stored by warehouse personal or by an automated system. The same applies to de-palletizing prior to shipment of the goods.

Handling of pallets is done, for example, with the help of forklift trucks, lifting carts or automated devices.

Racks or racking structures installed in common warehouses differ only slightly from each other, for example with respect to dimensions, yet the basic racking structure is the same for all the warehouses. Racking structures are fixed structures with multiple horizontal levels able to receive pallets. They are solidly built in order to carry the sometimes heavy goods stored on the pallets, which have to be accommodated by the racking structure.

While pallets are easily carriable and can be stored without demanding much space, the solid racking structures cannot be easily altered or converted. They demand much space. Furthermore, pallets can be purchased on demand, while racking structures are bought when the warehouse infrastructure is initially installed due to efforts and costs of their installation.

In order work cost-efficient, the available space, i.e. basal area and vertical height of the warehouse, which can theoretically be occupied by the racking infrastructure, is usually indeed occupied by the racking structure. Otherwise at peak periods a warehouse whose available space for racking structures is not fully occupied by those structures is working to its capacity but has to refuse to store more goods which may have been stored if more racking structures were installed. So profits which may have been earned by storing additional goods are missed. Thus the racking structures determine the maximal capacity of common warehouses.

Yet due to their inflexibility new racking structures cannot be easily added on demand, especially not when the warehouse is working to its capacity. Due to the aforementioned problem, as stated above, usually all the available space is occupied by racking structures right from the start. Therefore, the warehouse management has to purchase the whole racking infrastructure before the warehouse commences operations which is a financial risk. Even worse, the just-in-time strategy puts pressure on warehouses regarding the reduction of costs and the increase of flexibility which cannot be provided by common warehouses employing fixed racking.

The racking's inflexibility and the necessity to work efficiently at peak periods requires the whole structure to be built right from the start. In turn, this increases the total costs while the customer's demands for inexpensive storage and shipping require a decrease of costs. Therefore both, occasional under-utilization and fixed costs right from the beginning of operation which cannot be reduced without the warehouse incurring losses are typical characteristics of common warehouses.

Encountering the under-utilization of space in the racking structure, in some warehouses a complete level of the racking may be built with a reduced vertical height where pallets with reduced height loads can be stored. However, the overall structure is still fixed and installed at the start of the investment offering no flexibility thereafter.

While, for the reasons stated above, racking infrastructure employed in warehouses has an over-all inflexibility since it is purchased and installed from the beginning, there may be at least some flexibility owing to the convertibility of the shelf boards or similar structures. Without having to rebuild the whole rack, single shelf boards, or single horizontal elements carrying pallets in general, may be altered. For example, shelf boards are moved to another vertical position. This is done in order to incorporate a pallet bearing goods in such a way that the distance between the highest situated good and the overlaying shelf board is minimal. Hence the available space inside the racking structure is used most efficiently. Yet, the disadvantage is that the same shelf board carries pallets bearing loads of different total heights next to each other. In this situation the pallet with the highest load height among the neighbouring pallets on one shelf board determines the vertical position of the shelf board, while there may be some unoccupied space remaining above the pallets bearing loads with a minor load height. It is often not possible to produce sets of loaded pallets having the same vertical height in the palletizing operation due to the organizational effort necessary for this step. Therefore usually pallets with different load heights are stored on the same shelf board next to each other. The result is unoccupied space in the racking structure. Moreover, altering the shelf board requires all the pallets resting on this shelf board to be removed. Therefore the theoretical flexibility inside a rack conferred by alteration of shelf board contributes only minor advantages or goes along with new disadvantages, respectively.

There are a few examples of warehouse infrastructure which differs from the common configuration described above. However, these systems usually serve a special purpose and the invention cannot easily be transferred to any given warehouse. For example, the US 6,654,662 B1 discloses a method for organising the flow of goods in containers which are stored in a vertical framework. Although the US 6,654,662 B1 provides a method with several advantages over common warehouse storage and handling methods not any kind of good but only heterogeneous units can be employed and fixed racking in the form of a vertical framework has to be installed similar to conventional racking structures.

Since fixed racking represents as much as 50% of the cost of equipment and there is the request to reduce inventory and to increase operating efficiency and space utilization, inventions concerning racking structures are highly demanded.

However, such an invention should not only solve the problems described above but it should at the same time be compatible with existing infrastructure.

### OBJECT OF INVENTION

The object of the present invention is to overcome the problems of the prior art. Especially, the present invention provides a stacking frame for pallets and a system for storing and handling loads in warehouses which can easily be adjusted even when the warehouse is operating.

### SOLUTION OF THE OBJECT

This object is solved by the features described in the independent claims 1, 11 and 13.

According to the invention a stacking frame for pallets comprises a plurality of interconnected frame sections. A pallet can be introduced so that the frame sections essentially encompass the pallet. Preferably the pallet is a load-bearing pallet. Transport structures for supporting goods similar to pallets fall within the scope of the present invention.

Concrete stacking frames and/or frame sections and stacking frames and/or frame sections made of steel, wood or any other suitable material may be employed. Also a combination of the aforementioned materials may be used.

As will be described in more detail below, the stacking frame is superior to and readily replaces common racking structures employed in nowadays warehouses including conventional pallet warehouses or high bay warehouses, for example. By using flexible stacking frames instead of fixed racking especially time and space can be saved compared to common warehouse infrastructure.

According to an embodiment of the present invention the frame sections essentially proceed either horizontally or vertically. According to an embodiment the terms "horizontally" and "vertically" are defined relative to a ground the stacking frame rests on in a use location, i.e. when the stacking frame is loaded with a pallet or when it is involved in operation in a warehouse or the like.

According to a preferred embodiment the frame sections are interconnected in an essentially cuboid-like fashion. Preferably there are 12 interconnected frame sections forming the edges of the imaginary cuboid. Thus there is a set of four frame sections proceeding essentially vertically and two sets consisting of four frame sections each which proceed essentially horizontally. The two sets of frame sections proceeding essentially horizontally may be designated lower and upper set, as explained in more detail below.

However, according to another embodiment there may be additional frame sections, for example interconnecting opposite corners of the imaginary cuboid. In yet another embodiment the number of frame sections can be reduced, for example by replacing four frame sections proceeding horizontally by two intersecting frame sections. According to this embodiment, ends of the frame sections still form corners of the imaginary cuboid, yet the number of frame sections needed to build the stacking frame is reduced resulting in lower material cost and weight.

Also the number of frame sections proceeding vertically can be altered. For example two adjacent vertical frame sections can be replaced by one vertical frame section. Thus, two vertical frame sections representing adjacent edges of the imaginary cuboid are replaced by one vertical frame section arranged essentially centred between the edges of the imaginary cuboid.

In general it is stated that according to the challenges presented to the stacking frame the number of frame sections used to build the latter can either be reduced or elevated. A reduced number of frame sections serves to reduce cost and weight, for example, while an elevated number of frame sections may serve to increase the stability and safety of the stacking frame and its content.

According to an embodiment of the present invention the frame sections making up the stacking frame are arranged to form at least one recess allowing the horizontal introduction of the load-bearing pallet. According to a preferred embodiment the recess is the clear width between adjacent frame sections which together form a face of the imaginary cuboid. The stacking frame may comprise a plurality of recesses. This allows the pallet binned in the stacking frame to be operated, i.e. for example introduced or removed, from more than one side or face of the stacking frame.

The present invention encompasses stacking frames built from frame sections which are either permanently or reversibly interconnected. A permanent interconnection of frame sections can be achieved by interconnecting them in a firmly bonded fashion by welding, for example. A reversible interconnection can be achieved by screwing, bolting together or other form-fit or force-fit interconnection methods.

Irrespective of being either permanently or reversibly interconnected, the frame sections are either interconnected in a rigid or in a flexible fashion. For example, welded frame sections are interconnected in a rigid fashion. On the other hand, frame sections which are screwed together can be interconnected in an articulated and thus flexible fashion. Of course also hinges may be provided to establish a flexible interconnection between frame sections.

The present invention encompasses stacking frames with frame sections being interconnected in the same fashion. The present invention also encompasses stacking frames with at least a first plurality of the frame sections being interconnected in another fashion than at least a second plurality of frame sections. For example, the frame sections proceeding horizontally can be permanently interconnected facilitating the effort necessary to put the stacking frame into the use location since the interconnection of the horizontally proceeding elements does not have to be established each time the stacking frame is used. At the same time the frame sections proceeding vertically may be reversibly interconnected allowing the parts of the stacking frame to be stored occupying as little space - especially as little height - as possible. Generally the present invention encompasses the interconnection of the constituting frame sections to be resolved for storage or transportation.

According to an embodiment of the present invention, either the frame sections proceeding essentially horizontally and/or the frame sections proceeding essentially vertically are alterable in a telescope-like fashion. A suitable frame section which is alterable in a telescope-like fashion according to the present invention is a frame section comprising any means for extending and shortening the frame section. In a basic embodiment such a frame section consists of two parts. A first part of the frame section is mounted glidingly in a second part of the frame section. According to an embodiment the at least two parts of the frame section may be displaced relative to one another either in a stepless or in an incremental fashion. Preferably there are means to prevent displacement of the at least two parts. Thus, after bringing the parts in the desired position, they can be immobilized in order to prevent an inadvertent telescoping operation.

Frame sections which are alterable in a telescope-like fashion allow the size of the stacking frame to be adopted according to the requirements.

For example, when employing alterable frame sections proceeding essentially horizontally to build the stacking frame the latter can be used with pallets of different size, i.e. it allows for the introduction of pallets of different size. Moreover, such a stacking frame allows either for the introduction of one or for the simultaneous introduction of more than one pallet.

On the other hand, when the frame sections proceeding essentially vertically are alterable in a telescope-like fashion the stacking frame allows for the introduction of pallets with different load heights.

Of course either the frame sections proceeding essentially vertically or the frame sections proceeding essentially horizontally or both may be alterable in a telescope-like fashion.

Adopting either the height of the stacking frame and/or reducing the width and/or the depth of the stacking frame allows the stacking frame to adopt a shape which occupies as little space as possible during common warehouse operations. In this context reducing the height is done by shortening the frame section proceeding essentially vertically and reducing the width and/or the depth of the stacking frame is done by shortening the frame sections proceeding essentially horizontally.

At least one of the lower frame sections according to an embodiment of the present invention comprises means for resting on an essentially even plane and means for resting on another stacking frame. According to an embodiment of the present invention one means may be capable of fulfilling both aforementioned tasks.

In a basic embodiment the lower frame sections themselves may serve as means for resting. However, in order to allow the stacking frame to be easily operated by a forklift truck the means for resting according to another embodiment may be provided in form of a base consisting of at least one base member attached to at least one of the lower frame sections. The base according to an embodiment comprises at least one recess allowing the forks of a forklift truck to engage under the lower frame sections and thus being able to lift the stacking frame.

In general, the present invention encompasses at least one plurality of frame sections to be arranged to form means for resting on an essentially even plane as well as on another stacking frame. Any means suitable to fulfil this task are covered by the present invention.

According to an embodiment of the present invention the upper frame sections are arranged to form means for accommodating another stacking frame. According to an embodiment means are either attached to or formed by the upper frame sections. Advantageously means for accommodating and means for resting are built in a coordinated fashion. Thus a set of stacking frames can be stacked or piled up arbitrarily. Suitable means for accommodating another stacking frame are holes or blind holes operatively connectable to pins serving as means for resting.

According to a basic embodiment, means for accommodating consist of an essentially plane surface of at least one upper frame section in conjunction with edge means. Edge means and plane surfaces together form a seat for accommodating a stacking frame. Edge means in the form of an elevated edge segment, for example, are provided at least one upper frame section of a first stacking frame. These edge means are able to prevent a second stacking frame placed on top of the first stacking frame from glidingly being displaced or falling from the first stacking frame.

In general, the present invention encompasses at least one plurality of frame sections to be arranged to form means for accommodating another stacking frame. Any means suitable to fulfil this task are covered by the present invention.

According to an embodiment of the present invention, at least one application point for load handling devices is associated with at least one of the frame sections. Such a handling point may be provided by a base forming a recess and being arranged as described above, thus allowing the stacking frame to be handled by a fork lift truck. According to another embodiment, additionally or alternatively means for cooperative engagement with load handling devices may be attached to or formed by at least one of the upper frame sections. Such means for cooperative engagement include hooks, eyelets and the like. These means allow for cooperative engagement with tongs, claws or the like of a gantry crane, for example.

In general all application points allowing the stacking frame to be lifted, for example by grasping with the help of a crane or in a fork lift operation are encompassed by the present invention.

According to another embodiment of the present invention, a system for storing and handling loads comprises at least one stacking frame and a load handling device, which in turn comprises at least one means capable of entering into an operative connection with the application point of the stacking frame are provided. The stacking frame and the application point may be designed as described above. The load handling device is preferably a gantry crane, however, it may for example also be a stacker crane or another type of crane, a lifting vehicle such as a fork lift truck or the like.

According to a preferred embodiment, a plurality of stacking frames is provided. The plurality of stacking frames may either be arranged in a stacked and/or in a neighbouring fashion.

As will be explained in more detail below, the system maintains the advantages known from common warehouse technology employing pallets, but the racking structure is essentially replaced by the stacking frames.

In view of the system, major advantages the present invention has over the prior art are revealed. First, the system can be adopted in a variety of buildings, i.e. high or low buildings, etc. Conventional pallet storage, on the other hand, is optimised for high building and operated with stacker cranes, for example. Second, the system is flexible in the way that almost none of the features have to be permanently installed in the warehouse or storage building. When using gantry cranes for handling the stacking frames only those cranes have to be permanently installed in the building. Thus an assembly hall, which is typically equipped with gantry cranes, may be turned into a storage hall easily. Third, the system needs significantly less space than common pallet storage in a warehouse. Reduced space requirement is possible since the stacking frames are typically arranged in piles or columns consisting of a plurality of stacking frames stacked on top of each other. The piles, in turn, are arranged next to each other and may cover the whole floor area which can be reached using the gantry crane or another suitable load handling device. There is no need for lanes where stacker cranes or forklift trucks can move to handle pallets. Space reduction is especially important in cold warehouses where perishable food is handled, for example. Energy costs can efficiently be reduced by reducing the space requirements; consequently the present invention efficiently reduces the operating costs of cold warehouses, for example.

The pallets and load handling devices used within a system according to the present invention are compatible with common warehouse technology. Pallets, gantry cranes, stacker cranes, forklift trucks and the like may be used. When goods are received from or shipped to a warehouse where common warehouse technology is implemented, the system according to the present invention does not require the operating methods or any devices or tools to be changed.

It should be noted that while the area, i.e. depth and width of pallets is standardized, the loading height is highly variable, of course. Thus a set of stacking frames can be employed, each stacking frame consisting of frame sections which are permanently interconnected and which are all of the same width and depth but of different heights. Thus even without the size of the stacking frame being alterable by telescoping operations of the frame sections, for example, most efficient use of the available space is made since the major variable with pallets, i.e. the load height, is encountered by providing stacking frames of different height. Of course, also a set of stacking frames differing from each other with respect to depth or width may be employed. As well a combination of the aforementioned may be employed, for example a set of pallets differing from each other with respect to height and depth.

While the system according to the present invention including a gantry crane as described above may serve to significantly decrease the space required by the stored goods compared to common warehouse technology, stacker cranes and forklift trucks may still be used. When the stacked-up piles of stacking frames cover essentially the whole area to be used for storage there are no lanes for stacker cranes and forklift trucks, but the stacking frames may be arranged to yield such lanes. Accessibility by forklift trucks and stacker cranes lead to increased space demand, but when the use of forklift trucks, for example, is highly desired for some reasons, the can be used with a system according to the present invention. Generally accessibility with forklift trucks and the like via lanes and space reduction by densely arranging the piles of stacking frames are reciprocally related.

When lanes for forklift trucks and the like are provided safety measures surrounding the lanes may be considered. In order to prevent the stacks from being damaged and to prevent the piles from collapsing in case the lowest stacking frame in a pile is severely damaged safety measures may be installed. In an easy embodiment safety measures may be robust pillars. However, typically safety screens such as steel mesh fences are used. In case of an accident due to a human error or due to a machine error the aforementioned safety measures rather than the frames are damaged.

The same safety measures may surround an assembly consisting of piles of stacking frames arranged next to each other, irrespective of the presence of lanes in this assembly.

In general any means capable of absorbing the impact of a collision which would otherwise damage the stacking frames may be provided.

According to an aspect of the present invention a method for operating a system as described above with load handling devices arranging a plurality of stacking frames into stacked columns is provided. Preferably, the load handling device arranges at least a plurality of stacked columns adjacent to each other. The space requirement can be reduced with a method arranging the stacking frames adjacent to each other. While reduced space requirement can be reached with the system installed in any type of hall or building, the time necessary to handle a stacking frame containing a desired load-bearing pallet stored undermost in the middle of a plurality of stacked columns is proportional to the height of the hall or building. When the columns consist of two or three stacking frames placed on top of each other, the undermost stacking frame is readily accessible. On the other hand, when the columns consist, for example, of ten stacking frames, nine stacking frames have to be removed to have access to the undermost stacking frame. Removal of nine stacking frames is of course time-consuming. Consequently, when time reduction concerning the storage and picking operations is desired, the operation is best conducted in a low hall or building. Yet, of course, by leaving lanes for stacker cranes pallets resting in stacking frames situated undermost in the middle of a plurality of stacked columns are again rapidly accessible. This accessibility should be provided with care, of course, as it comes along at the expense of the space reduction brought about by the method and system according to the present invention.

Moreover, time reduction can be achieved by building stacks of frames where all the frames contain pallets with the same good. Therefore there is no need to have access to the lower frames of a given stack for obtaining a desired good.

The method for operating the system also comprises introduction of a load bearing pallet into a stacking frame through a recess in the stacking frame as well as removal of the pallet. Suitable means for fulfilling this task are forklift trucks, for example.

Another aspect of the method according to the present invention for warehouse owners is the fact that the stacking frames can be bought on demand since no installation is necessary in contrast to common racking structures. Also leasing the stacking frames on demand becomes possible when using stacking frames.

Of course, all the steps according to the method described above may be done in an automated fashion.

Inside the stacking frame means may be provided for receiving the pallet and preventing it from gliding or inadvertently exiting the stacking frame, for example indentations. The indentations are advantageously dimensioned so as to allow the pallet to be removed with the help of a forklift truck. Thus the indentations are not so deep as to accommodate the whole pallet.

In general it should be noted, that stacking frames with one face containing a recess for introducing and removing pallets which is not situated adjacent to another stacking frame is accessible for fork lift trucks and stacker cranes and may essentially be handled similar to a racking structure supporting a pallet in a common warehouse.

Furthermore, according to the present invention the storage step in a warehouse is divided up into two parts, introducing the pallet in the stacking frame and arranging the stacking frame at its destination, for example on top of another stacking frame. Common warehouse technology includes only one step of introducing the pallet into the racking structure.

The advantage brought about by the present invention is a significant increase in flexibility, especially concerning disposing of the handling steps. For example, the first step of the storage operation, i.e. introducing the pallet into the stacking frame, can be done at a desired point of time and the second step, the actual stacking operation where stacking frames containing the pallets are piled up may be done at a later point of time. Moreover, at least one of these steps may be done in an automated fashion. Obviously automation of a process is commonly done by breaking the desired process in small steps. This is eased by the two-part storage step according to an aspect of the present invention.

Furthermore, while according to common warehouse technology the pallet is not easily accessible when it rests in the racking structure without removing it, the pallet resting in the stacking frame is easily accessible from all sides or faces. Thus any operation, for example controlling the goods before the stacking frame is finally stacked up or removal of single goods or the like can be done while the pallet rests in the stacking frame.

Thus the present invention provides a stacking frame, a system and a method for operating the system which results in reduction of inventory, increase in operation efficiency and increase in space utilization.

### Description of Figures

Further advantages, features and details of the invention will become apparent from the following description of preferred embodiments and from the figures, showing in:
Figure 1 a system for storing and handling loads according to an embodiment of the present invention in perspective view,
Figure 2 a stacking frame according to a first embodiment of the present invention in perspective view,
Figure 3 a stacking frame according to a second embodiment of the present invention in perspective view,
Figure 4 a stacking frame according to a third embodiment of the present invention in perspective view,
Figure 5 a stacking frame according to a fourth embodiment of the present invention as schematic drawing in perspective view,
Figure 6 a stacking frame according to a fifth embodiment of the present invention as schematic drawing in perspective view,
Figure 7 a stacking frame according to a sixth embodiment of the present invention as schematic drawing in perspective view,
Figure 8.1 a stacking frame according to a seventh embodiment of the present invention in perspective view,
Figure 8.2 a stacking frame according to an eighth embodiment of the present invention in perspective view
Figure 9.1 a stacking frame according to a ninth embodiment of the present invention encompassing a pallet in perspective view,
Figure 9.2 the stacking frame according to figure 8.1 without the pallet in perspective view,
Figure 10.1 the stacking frame according to figure 9.1 in front view,
Figure 10.2 the stacking frame according to figure 9.1 in side view,
Figure 10.3 the stacking frame according to figure 9.1 in top view,
Figure 11.1 a pile composed of stacking frames,
Figure 11.2 a plurality of piles arranged next to each other,
Figure 12 depicts a schematical scanning operation and
Figure 13 shows stacking frames 1 being handled with by gantry cranes 10.

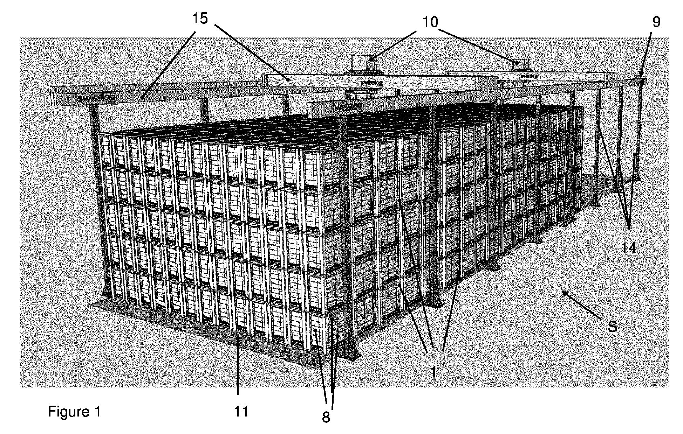

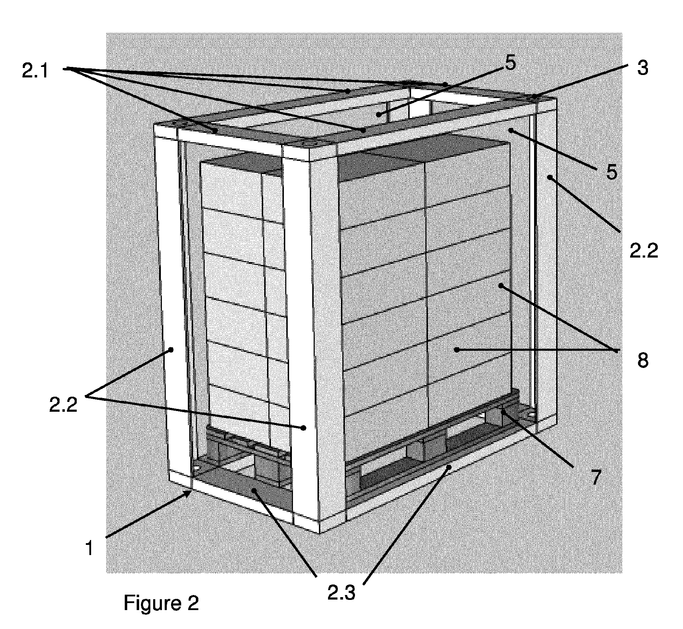

Figure 1 shows a system S comprising stacking frames 1 and load handling devices in the form of gantry cranes 10. The gantry cranes 10 are supported by a gantry 9 comprising pillars 14 and crossbeams 15. The stacking frames 1 contain pallets 7 (see figure 2) supporting goods 8. The stacking frames 1 are stacked up and rest on a designated ground for storage 11.

Figure 2 shows a basic embodiment of the stacking frame 1. The stacking frame 1 consists of frame sections 2.1, 2.2, and 2.3. The frame sections 2.1, 2.2 and 2.3 are arranged to form introduction recesses 5. The stacking frame sections 2.1 are provided with accommodation means in the form of blind holes 3. Within the stacking frame 1 there is the pallet 7 supporting goods 8. The pallet 7, in turn, is supported by the frame sections 2.3.

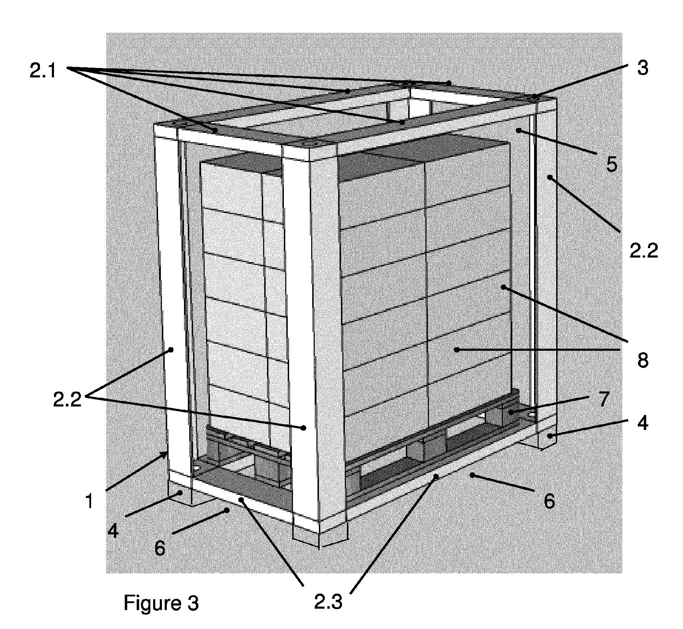

Figure 3 shows an alternative embodiment of the stacking frame 1 whereby a repetition of same elements is omitted especially if same reference numerals denote same elements. The stacking frame 1 comprises resting means 4 attached to the frame sections 2.3. Between the resting means 4 there are recesses 6 for lifting means such as forks of a fork lift truck.

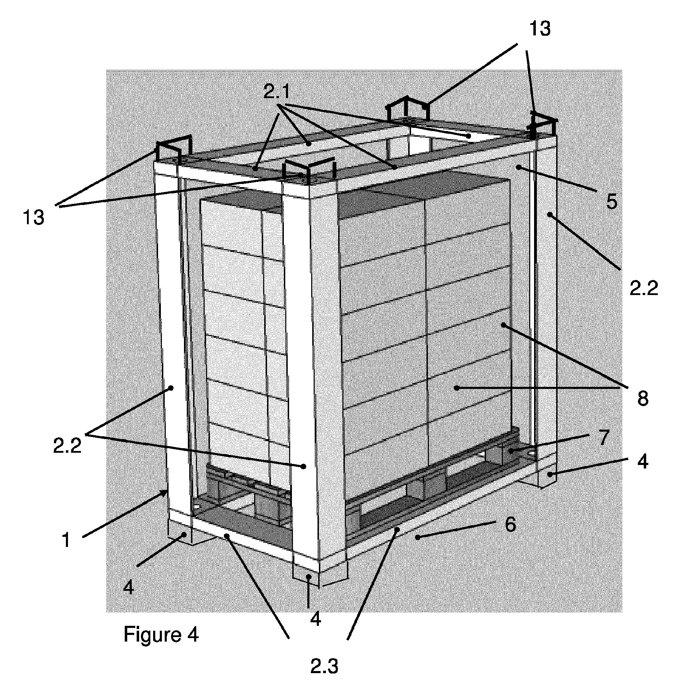

Figure 4 shows yet another embodiment of the stacking frame 1 further comprising alternative accommodation means 13 attached to the frame sections 2.1.

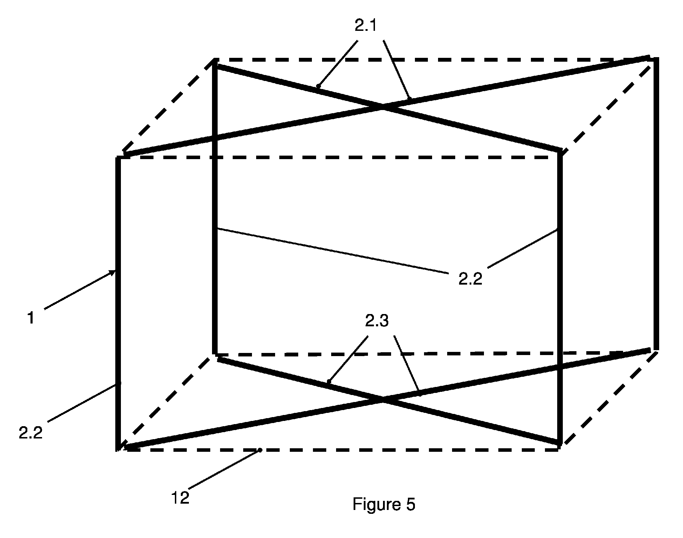

Figure 5 shows a schematic drawing of a further embodiment of the stacking frame 1 with a reduced number and alternative arrangement of frame sections 2.1 and 2.3 compared to the embodiments shown in figures 2 - 4.

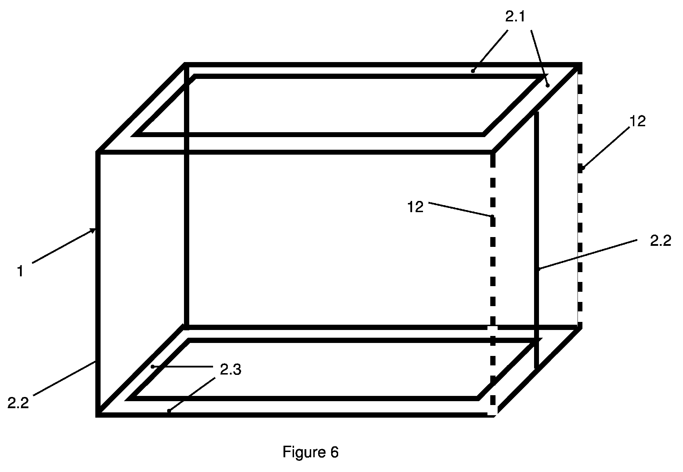

Figure 6 shows a schematic drawing of another embodiment of the stacking frame 1 with a reduced number and alternative arrangement of frame sections 2.2 compared to the embodiments shown in figures 2 - 4.

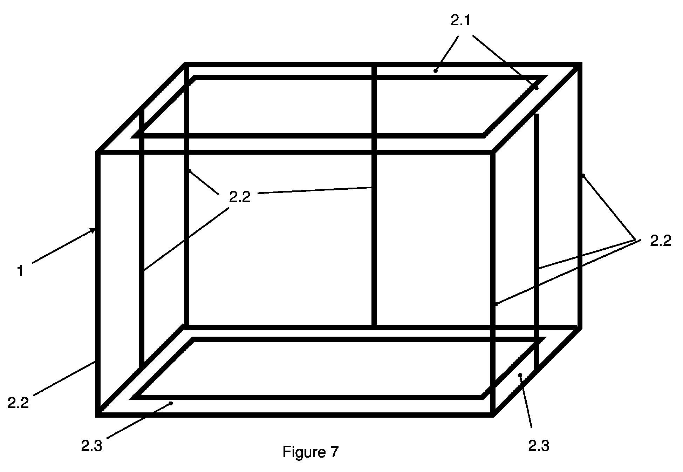

Figure 7 shows a schematic drawing of another embodiment of the stacking frame 1 with an elevated number and alternative arrangement of frame sections 2.2 compared to the embodiments shown in figures 2 - 4.

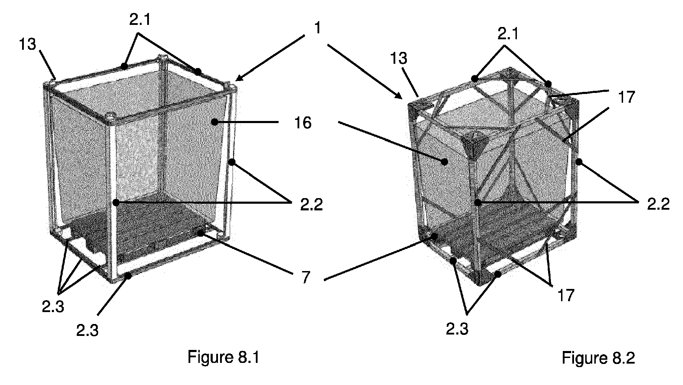

Figure 8.1 shows another embodiment of a stacking frame 1. The pallet 7 rests on two frame sections 2.3 which are proceeding essentially horizontally. Goods 16 resting on the pallet 7 are indicated by the area above the pallet 7. In contrast to figure 4, the edge means 13 face towards the inside of the imaginary cuboid.

Figure 8.2 shows yet another embodiment of a stacking frame 1. The frame sections 2.1, 2.2, 2.3 are interconnected via interconnection sections 17.

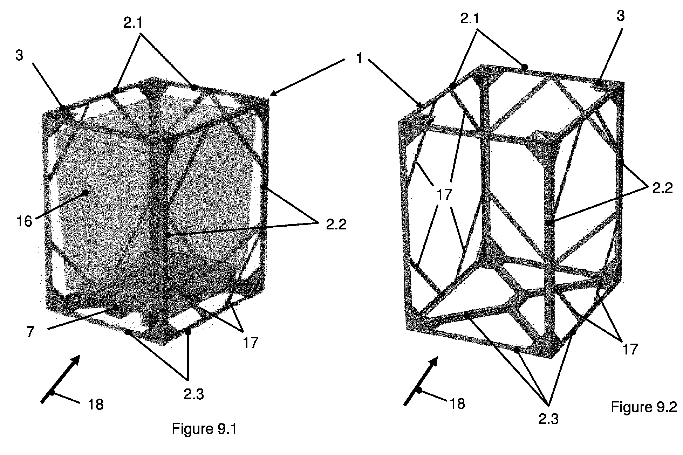

Figure 9.1 shows another embodiment of a stacking frame 1. Figure 9.2 shows the situation depicted in figure 9.1 without the pallet 7 and the indicated goods 16. The frame 1 comprises frame sections 2.1, 2.2, 2.3 and interconnection sections 17.

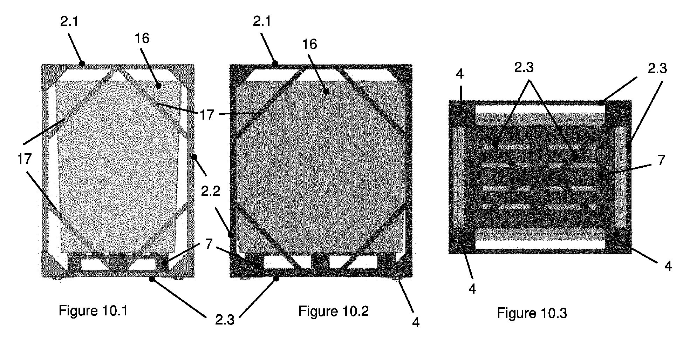

In figures 10.1 to 10.3 the frame shown in figures 9.1, 9.2 is depicted. Especially the resting means 4 are visible very well.

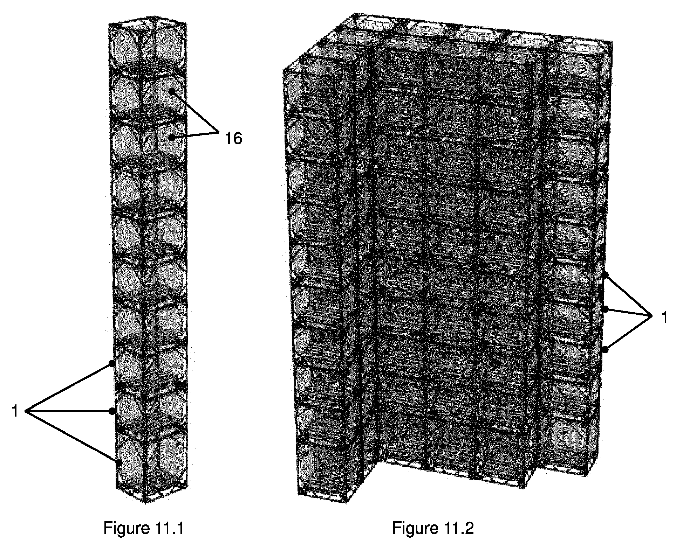

Figure 11.1 shows a pile composed of stacking frames 1 and figure 11.2 shows eleven piles arranged next to each other.

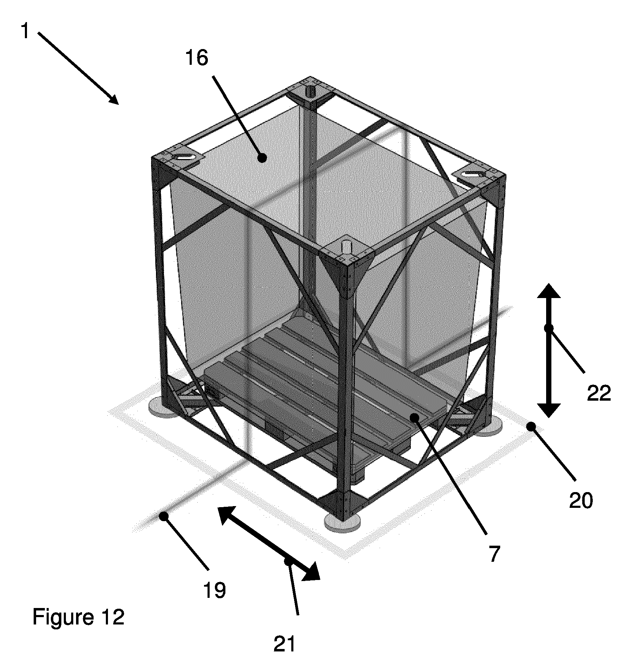

Figure 12 shows a frame 1 being scanned. Two scanning planes 19, 20 are depicted.

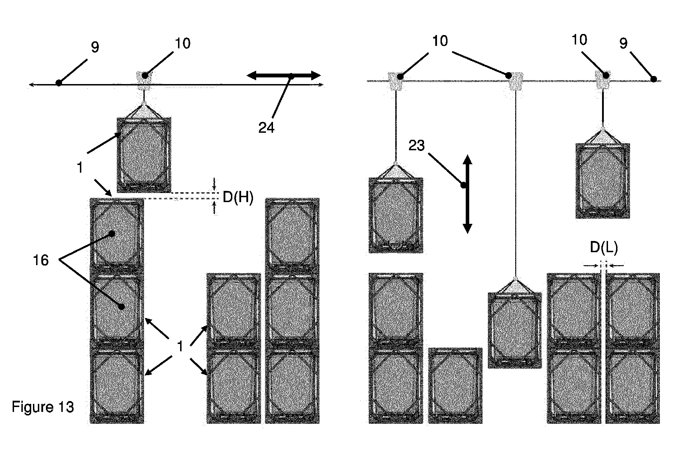

Figure 13 shows stacking frames 1 being handled with by gantry cranes 10 arranged on gantries 9..

Referring to figures 1 - 13 the functioning of the present invention is explained as follows:
The stacking frame 1 consists of a plurality of frame sections 2.1, 2.2 and 2.3, wherein the number and arrangement of frame sections 2.1, 2.2 and 2.3 may vary depending on the requirements. In a basic embodiment best illustrated in figure 2 there is a total number of 12 frame sections 2.1, 2.2 and 2.3. In order to save material and thus cost and weight, the number of frame sections 2.1, 2.2 and 2.3 compared to the basic embodiment illustrated in figure 2 may be reduced by employing intersecting frame sections 2.1, 2.3 proceeding essentially horizontally as shown in Figure 5. Figure 6 shows another embodiment where the number of frame sections 2.2 which proceed essentially vertically is reduced. The reduction is achieved by replacing two neighbouring frame sections 2.2 by one frame section arranged in an essentially centered position compared to the position of the two replaced frame sections 2.2 shown in figures 2 - 5.

In order to provide stability and safety concerning damage to the goods 8 supported by the pallet 7 and surrounded by the stacking frame 1 additional frame sections 2.1, 2.2 and/or 2.3 may be provided. Figure 7 shows an embodiment where the number of frame sections 2.2. is increased. An increased number of frame sections 2.2 compared to the embodiment shown in figure 2 leads to increased stability of the stacking frame 1. Furthermore, the pallet (not shown) which may be introduced in the stacking frame 1 as shown in figure 7 is secured against damage resulting from objects protruding to the inside of the stacking frame 1.

While the number and arrangement of frame sections 2.1, 2.2 and 2.3 differs between stacking frames 1 built according to different embodiments of the present invention, the general cuboid-like arrangement visible in figures 2 - 4 is maintained. This is illustrated by the dotted line 12 in figures 5 and 6. Therefore, though built from a different number of frame sections 2.1, 2.2 and 2.3 in another arrangement all the stacking frames 1 according to the present invention can be handled similarly and no further adjustment of warehouse infrastructure is necessary.

In a typical logistic operation such as the storage of goods the pallet 7 supporting goods 8 is introduced to the stacking frame 1 through the recess 5 designated for this purpose. Irrespective of the number of frame sections 2.1, 2.2 and 2.3 and their arrangement all the stacking frames 1 according to the present invention are equipped with at least one introduction recess 5 which allows introduction of the load-bearing pallet 7. In the embodiment depicted figures 9.1 and 9.2, for example, the introduction of the pallet 7 can only take place in the direction following the arrow 18 due to the interconnection sections 17 provided on the other faces of the imaginary cuboid.

Besides providing stability to the stacking frame 1 the interconnection sections 17 may also provide additional safety to the goods 8, 16 by preventing the access for means possibly damaging the goods 8, 16.

The pallet 7 rests on frame sections 2.3, this situation is shown in figures 2 to 4 and 8 to 10. The frame sections 2.3 may be arranged in a way to securely support the pallet 7.

After a plurality of stacking frames 1 is loaded with pallets 7, stacking frames 1 are piled up by the gantry crane 10 supported by the gantry 9. Gantry cranes 10 handle the stacking frames 1 by interaction with an application point (not shown) provided at the stacking frame 1. Stacking frames 1 are further equipped with means 3, 4, 13 allowing both supporting of and being supported by another stacking frame 1.

Resting means 4 allow the stacking frame 1 to rest either on the ground 11 or on another stacking frame 1. The embodiments shown in figures 3 and 4 are equipped with resting means 4 in the form of base elements attached to the frame sections 2.3. In the basic embodiment shown in figure 2 the frame sections 2.3 themselves serve as resting means.

In order to support a second stacking frame 1 placed on top, a first stacking frame 1 is equipped with accommodation means 3, 13. Accommodation means in the form of blind holes 3 are shown in figures 2 and 3 and accommodation means in the form of holes 3 are shown in figure 8.2, for example. They readily accommodate a stacking frame 1 placed on top by operative interaction with resting means 4 supported with a pin (not shown).

As shown in figure 4 and 8.1, the accommodation means may also be formed as an edge mans 13. Both, the holes or blind holes 3 and the edge means 13 prevent a second stacking frame 1 placed on a first stacking frame 1 from falling, gliding and the like and provide a safe stand.

The gantry crane 10 stacks up the stacking frames 1 to piles and arranges a plurality of piles adjacent to each other, thus making most efficient use of the ground space 11 for storage available in a warehouse or the like.

As shown in figure 12, frames 1 can be controlled by an optical system. Such systems are well known logistics technology and include for example at least one scanning operation conducted to control the dimensions of the frame 1, the pallet 7 and all the goods 16 stored on the pallet 7 or in the frame 1. In detail, scanning operations are conducted to check whether the pallets 7 are correctly incorporated in the frame 1, to check whether the goods are correctly stored on the pallet 7 or whether the aforementioned components are intact.

An optical system (not shown) may for example conduct a scanning operation by optically measuring the integrity of a pallet-bearing frame 1 so that a first scanning plane 19 traverses the frame 1 alongside a first direction 21 and a second scanning plane 20 traverses the frame 1 alongside a second direction 22.

As shown in Figure 13, gantry cranes 10 moving along a schematically shown gantry 9 in an essentially horizontal direction 24 handle the stacking frames 1. The gantry cranes 10 are capable of lifting or lowering the stacking frames 1 along an essentially vertical direction 23 at any desired position along the gantry 9. Using stacking frames 1, a system S and a method according to the present invention, figure 13 shows how piles of stacking frames 1 can be arranged next to each other requiring only minimal lateral distance D(L) inbetween. Moreover, the stacking frames 1 can be moved by the gantry cranes 10 in a way that the height distance D(H) between two frames 1 may be minimal since no forklifts or the like are engaged in the movement.

**Reference numbers**

| | | | | | |
|---|---|---|---|---|---|
| 1 | Stacking frame | 34 | | 67 | |
| 2 | Frame section | 35 | | 68 | |
| 3 | hole / blind hole | 36 | | 69 | |
| 4 | Resting means | 37 | | 70 | |
| 5 | Introduction recess | 38 | | 71 | |
| 6 | Recess for lifting means | 39 | | 72 | |
| 7 | Pallet | 40 | | 73 | |
| 8 | Goods | 41 | | 74 | |
| 9 | Gantry | 42 | | 75 | |
| 10 | Gantry crane | 43 | | 76 | |
| 11 | Ground for storage | 44 | | 77 | |
| 12 | Dotted line | 45 | | 78 | |
| 13 | Edge means | 46 | | 79 | |
| 14 | Pillar | 47 | | | |
| 15 | Crossbeam | 48 | | | |
| 16 | Schematic goods | 49 | | | |
| 17 | Interconnection sections | 50 | | | |
| 18 | arrow | 51 | | | |
| 19 | First scanning plane | 52 | | | |
| 20 | Second scanning plane | 53 | | | |
| 21 | First direction | 54 | | | |
| 22 | Second direction | 55 | | | |
| 23 | Vertical direction | 56 | | | |
| 24 | Horizontal direction | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | D(H) | Height distance |
| 31 | | 64 | | D(L) | Lateral distance |
| 32 | | 65 | | S | System |
| 33 | | 66 | | | |

## Claims

1. Stacking frame (1) for pallets (7) comprising a plurality of interconnected frame sections (2),
**characterized in that**
a load-bearing pallet (7) can be introduced so that the frame sections (2) essentially encompass the load-bearing pallet (7).

2. Stacking frame (1) according to claim 1, **characterized in that** the frame sections (2) essentially proceed either horizontally or vertically.

3. Stacking frame (1) according to at least one of the preceding claims, **characterized in that** the frame sections (2) are interconnected to essentially form a cuboid.

4. Stacking frame (1) according to at least one of the preceding claims, **characterized in that** the frame sections (2) are arranged to form at least one recess (5) allowing the horizontal introduction of the load-bearing pallet (7).

5. Stacking frame (1) according to at least one of the preceding claims, **characterized in that** a plurality of frame sections (2) is arranged to form means (4) for resting on an essentially even plane as well as on another stacking frame (1).

6. Stacking frame (1) according to at least one of the preceding claims, **characterized in that** a plurality of frame sections (2) is arranged to form means (3, 13) for accommodating another stacking frame.

7. Stacking frame (1) according to at least one of the preceding claims, **characterized in that** at least one application point for load handling devices (10) is associated with at least one of the frame sections (2).

8. Stacking frame (1) according to at least one of the preceding claims, **characterized in that** the frame sections (2) proceeding essentially horizontally are alterable in a telescope-like fashion to allow for the introduction of either pallets (7) of different size or for simultaneous introduction of more than one pallet (7).

9. Stacking frame (1) according to at least one of the preceding claims, **characterized in that** the frame sections (2) proceeding essentially vertically are alterable in a telescope-like fashion to allow for the introduction of pallets (7) with different load heights.

10. Stacking frame (1) according to at least one of the preceding claims, **characterized in that** an interconnection of the frame sections (2) can be resolved for storage or transportation.

11. System (S) for storing and handling loads comprising at least one stacking frame (1) according to at least one of the claims 1 to 10 and a load handling device (10), **characterized in that** the load handling device (10) comprises at least one means capable of entering into an operative connection with the application point of the stacking frame (1).

12. System (S) for storing and handling loads according claim 11, **characterized in that** a plurality of stacking frames (1) is arranged either in a stacked and/or neighbouring fashion.

13. Method for operating a system (S) according to at least one of the claims 11 and 12, **characterized in that** the load handling (10) device arranges a plurality of stacking frames (1) into stacked columns.

14. Method according to claim 13 **characterized in that** the load handling device (10) arranges at least a plurality of stacked columns adjacent to one another.

15. Method according to one of the claims 13 and 14 **characterized in that** the stacking frames (1) are controlled by an optical control system.
